**Europäisches Patentamt**

**European Patent Office**

**Office européen des brevets**

(19)

(11) Veröffentlichungsnummer : **0 080 020**
**B1**

(12) **EUROPÄISCHE PATENTSCHRIFT**

(45) Veröffentlichungstag der Patentschrift :
**30.01.85**

(21) Anmeldenummer : **82106702.2**

(22) Anmeldetag : **24.07.82**

(51) Int. Cl.⁴ : **H 04 L 27/06, H 04 L 27/22**

(54) **Verfahren zur Ermittlung der optimalen Abtastzeitpunkte eines QPSK- oder QAM-Empfangssignals.**

(30) Priorität : **21.11.81 DE 3146281**

(43) Veröffentlichungstag der Anmeldung :
**01.06.83 Patentblatt 83/22**

(45) Bekanntmachung des Hinweises auf die Patenterteilung : **30.01.85 Patentblatt 85/05**

(84) Benannte Vertragsstaaten :
**BE DE FR GB IT LU NL**

(56) Entgegenhaltungen :
**DE-A- 2 544 124**
**DE-B- 1 512 561**
**US-A- 3 646 446**
**US-A- 3 962 637**
**US-A- 4 143 322**

(73) Patentinhaber : **ANT Nachrichtentechnik GmbH**
**Gerberstrasse 33**
**D-7150 Backnang (DE)**

(72) Erfinder : **Weber, Herbert**
**Robert-Bosch-Strasse 1**
**D-7150 Backnang (DE)**

(74) Vertreter : **Schickle, Gerhard, Dipl.-Ing. et al**
**ANT Nachrichtentechnik GmbH Patent- und**
**Lizenzabteilung Gerberstrasse 33**
**D-7150 Backnang (DE)**

Jouve, 18, rue St-Denis, 75001 Paris, France

**Beschreibung**

Die vorliegende Erfindung betrifft ein Verfahren zur Ermittlung der optimalen Abtastzeitpunkte eines durch Funkfeldstörungen beeinflußten, vierphasenumgetasteten (QPSK) oder quadratur-amplitudenmodulierten (QAM) Empfangssignals.

Bei der Übertragung eines solchen phasen- bzw. amplituden- und phasenmodulierten Signals über eine Richtfunkstrecke verursachen Mehrwegausbreitungen häufig starke Störungen, die eine fehlerfreie Demodulation erschweren. Und zwar erfahren auf Grund der Mehrwegeausbreitung die beiden Quadraturkomponenten des Modulationssignals sowohl Amplitudenals auch Phasenlaufzeitverzerrungen. Es besteht nun das Problem, für die verzerrten Quadraturkomponenten des Empfangssignals im Demodulator Abtastzeitpunkte zu ermitteln, die eine möglichst fehlerfreie Wiedergewinnung der ursprünglichen Information aus dem gestörten Signal gewährleisten. Aus der DE-B2-15 12 561 geht ein Verfahren hervor, bei dem zur Ermittlung der Abtastzeitpunkte jeweils die Maximalwerte der beiden Quadraturkomponenten herangezogen werden. Diese Maxima können aber u. U. wegen der Amplituden- und Phasenlaufzeitverzerrungen sehr weit entfernt vom die korrekte Information wiedergebenden Abtastwert liegen, so daß zusätzliche Maßnahmen zur Fehlerermittlung notwendig sind.

Der Erfindung liegt daher die Aufgabe zugrunde, ein vereinfachtes Verfahren anzugeben zur Ermittlung der optimalen Abtastzeitpunkte eines durch Funkfeldstörungen beeinflußten, vierphasenumgetasteten (QPSK) oder quadratur-amplitudenmodulierten (QAM) Empfangssignals, wobei zu diesen Abtastzeitpunkten das Empfangssignal trotz der Störungen die korrekte, ursprüngliche Information abgibt.

Die Aufgabe wird erfindungsgemäß dadurch gelöst, daß im Empfänger die Amplituden der beiden Quadratkomponenten (x, y) des Empfangssignals miteinander verglichen werden und daß die Zeitpunkte, in denen die beiden Amplituden betragsmäßig gleichgroß sind, als Abtastzeitpunkte festgelegt werden.

Dieses erfindungsgemäße Verfahren hat den Vorteil, daß durch Tiefpässe und Bandfilter im Sender und Empfänger hervorgerufene Amplituden- und Phasenlaufzeitverzerrungen des Modulationssignals ebenfalls das Detektieren der richtigen, ursprünglichen Information nicht behindern.

Anhand eines in der Zeichnung dargestellten Ausführungsbeispiels wird nun die Erfindung näher erläutert.

Figur 1 zeigt das Modulationssignal, dargestellt in der Phasenebene, und

Figur 2 zeigt den zeitlichen Verlauf des Modulationssignals beim Übergang von einem Signalzustand in einen anderen.

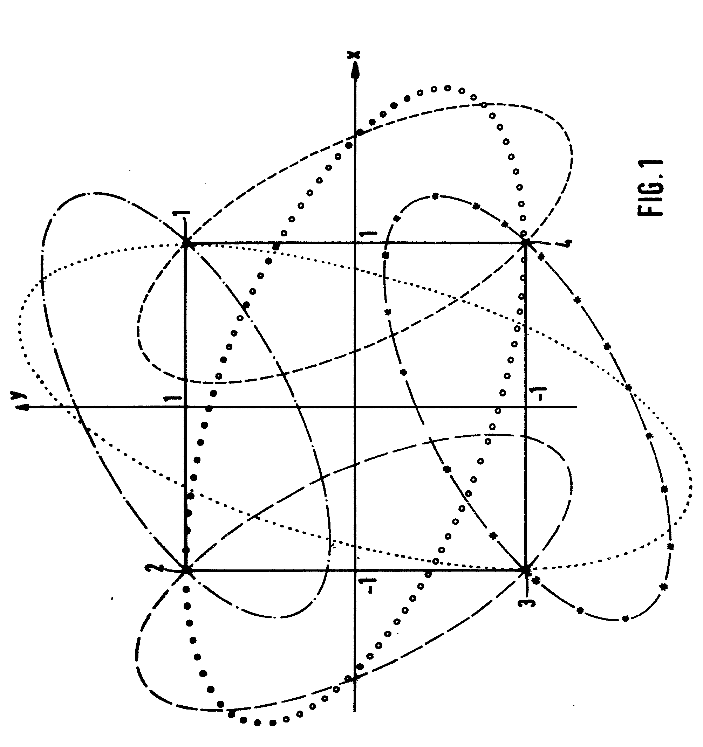

In der Fig. 1 ist die Phasenebene eines QPSK-Signals dargestellt. Hierbei gibt es vier verschiedene, bestimmten Bitpaaren zugeordnete Signalzustände 1, 2, 3 und 4, die sich durch Kombination der zwei Quadraturkomponenden x und y, welche um 180° gegeneinander gedrehte Amplitudenwerte (+ 1, − 1) annehmen können, ergeben.

Sofern das Modulationssignal ungestört ist, finden die Übergänge zwischen den einzelnen Signalzuständen auf direkten Wegen (durchzogene Geraden) statt. In diesem Fall erreicht man jeweils durch Abfrage einer der Quadraturkomponenten auf ihr Maximum immer die optimalen Abtastzeitpunkte, zu denen man sich in den die genaue, ursprüngliche Information wiedergebenden Signalzuständen 1, 2, 3, oder 4 befindet.

Im Störungsfall, d. h. bei durch Mehrwegeausbreitung auf der Richtfunkstrecke erzeugten Amplituden- und Phasenlaufzeitverzerrungen des Modulationssignals, finden die Übergänge von einem Signalzustand in den nächsten nicht mehr auf geraden, sondern auf ellipsenförmigen Wegen statt. In der Fig. 1 sind diese ellipsenförmigen Übergänge zwischen den Signalzuständen 1, 2, 3 und 4 eingezeichnet. Die Schräglage der Ellipsen hängt von der Größe der Phasenlaufzeitverzerrung und deren Breite von der Größe der Amplitudenverzerrung ab.

Unabhängig von den Verzerrungen gehen die Ellipsen immer durch die Punkte 1, 2, 3 und 4, denen die unverfälschten, die ursprüngliche Information enthaltenden Signalzustände entsprechen. Diese Punkte sind dadurch gekennzeichnet, daß sie aus der Kombination der zwei Quadraturkomponenten mit betragsmäßig gleicher Amplitude hervorgehen. Demzufolge werden im Demodulator, wenn man sich in der Nähe der Signalzustände 1, 2, 3 oder 4 befindet, die Amplituden der beiden Quadraturkomponenten x und y miteinander verglichen und als Abtastzeitpunkte die Zeitpunkte festgelegt, zu denen die Beträge der Amplituden gleich groß sind.

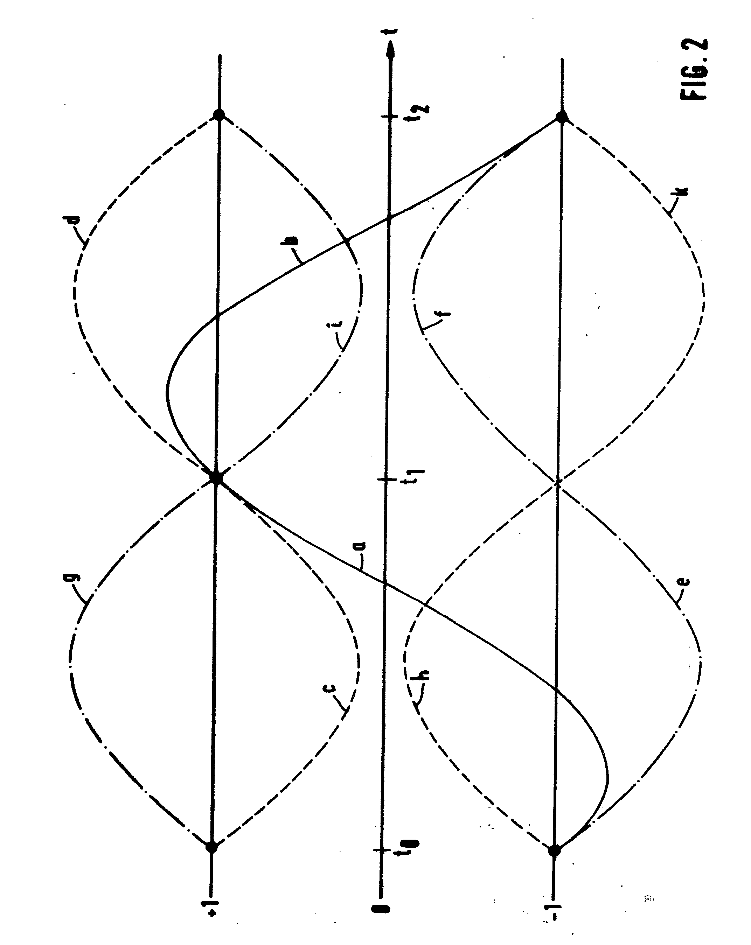

Die Übergänge von einem Signalzustand in den nächsten verdeutlicht die Darstellung der in Fig. 2 gezeigten Zeitebene.

Die einzelnen Kurvenabschnitte a bis k stehen für folgende Signalzustandsübergänge der durch Funkfeldstörungen beeinflußten Quadraturkomponenten x und y.

$x (1 \rightarrow 2) : b \quad y (1 \rightarrow 2) : d$
$x (2 \rightarrow 1) : a \quad y (2 \rightarrow 1) : c$
$x (2 \rightarrow 3) : k \quad y (2 \rightarrow 3) : b$
$x (3 \rightarrow 2) : h \quad y (3 \rightarrow 2) : a$
$x (3 \rightarrow 4) : a \quad y (3 \rightarrow 4) : e$

2

0 080 020

x (4 → 3) : b    y (4 → 3) : f
x (4 → 1) : g    y (4 → 1) : a
x (1 → 4) : i    y (1 → 4) : b

Der Übersichtlichkeit halber sind die Übergänge (1 → 3), (3 → 1), (2 → 4) und (4 → 2) in der Fig. 2 nicht eingezeichnet worden.

Auch die Darstellung in der Zeitebene gibt wieder, daß es festliegende Schnittpunkte der Kurven gibt und daß diese Schnittpunkte zu Zeiten $t_0$, $t_1$ und $t_2$ auftreten, wo die Beträge der Amplituden der beiden Quadraturkomponenten x und y gleich groß sind. Zu den Zeiten $t_0$, $t_1$ und $t_2$ erfolgt, wie weiter oben ausgeführt, die Abtastung.

Das erfindungsgemäße Verfahren zur Bestimmung optimaler Abtastzeitpunkte ist anhand der QPSK-Modulation mit nur vier Signalzuständen beschrieben worden. Das Verfahren läßt sich genauso auch auf die QAM-Modulation anwenden, wo durch Amplitudenstufungen der Quadraturkomponenten 8, 16, 32... verschiedene Signalzustände erzeugt werden.

**Anspruch**

Verfahren zur Ermittlung der optimalen Abtastzeitpunkte eines durch Funkfeldstörungen beeinflußten, vierphasenumgetasteten (QPSK) oder quadratur-amplitudenmodulierten (QAM) Empfangssignals, dadurch gekennzeichnet, daß im Empfänger die Amplituden der beiden Quadraturkomponenten (x, y) des Empfangssignals miteinander verglichen werden und daß die Zeitpunkte, in denen die beiden Amplituden betragsmäßig gleich groß sind, als Abtastzeitpunkte festgelegt werden.

**Claim**

Method for the determination of the optimum sampling instants of a quadri-phase shift-keyed (QPSK) or quadrature amplitude-modulated (QAM) received signal influenced by radio field interference, characterised thereby, that the amplitudes of both the quadrature components (x, y) of the received signal are compared each with the other in the receiver and that the instants, in which both the amplitudes are equally great in amount, are defined as scanning instants.

**Revendication**

Procédé pour déterminer les instants d'échantillonnage optimaux d'un signal reçu en modulation de quadrature de phase manipulée (QPSK), ou en modulation de quadrature d'amplitude (QAM), et qui est influencé par des perturbations du champ hertzien, caractérisé en ce que les amplitudes des deux composantes de quadrature (x, y) du signal reçu sont comparées entre elles dans le récepteur et que les instants où les amplitudes sont de même grandeur sont fixés comme instants d'échantillonnage.

3

FIG.1

0 080 020

FIG. 2